# EUROPEAN PATENT SPECIFICATION

(11) **EP 0 426 388 B1**
(45) Date of publication and mention of the grant of the patent: **23.08.1995**
(21) Application number: 90311751.3
(22) Date of filing: 26.10.1990
(51) Int. Cl.: C08K 3/16, C08L 21/00, B60C 11/14

(54) **Rubber composition and tyre tread**
Kautschukmischung und Luftreifenlauffläche
Composition de caoutchouc et bande de roulement pour pneumatique

(30) Priority: 26.10.1989 JP 279185/89
(43) Date of publication of application: 08.05.1991
(73) Proprietor: SUMITOMO RUBBER INDUSTRIES LIMITED, Kobe-shi Hyogo-ken (JP)
(72) Inventor: Takatsu, Sumio, Nishinomiya-shi, Hyogo (JP); Muraoka, Kiyoshige, Kobe-shi, Hyogo (JP)
(74) Representative: Stewart, Charles Geoffrey

(56) References cited:
- US-A- 2 274 855
- US-A- 2 582 701
- DATABASE WPIL, accession no. 88-350361 [49], Derwent Publications Ltd, London, GB; JP-A-63 262 293
- DATABASE CHEMICAL ABSTRACTS (HOST:STN), vol. 113, no. 8, 1990, abstract no. 61109r, Columbus, Ohio, US; & JP-A-02 077 305

## Description

The present invention relates to a rubber composition. More particularly, it relates to a rubber composition suitable for tyre treads which are used when driving on snow and ice.

Spikes or studded tyres and studless tyres are known for driving on snow, ice and other slippery roads.

Spiked tyres have advantages in slip resistant properties on frozen roads, but, when driving on paved roads, they wear the road surface and cause serious problems of dust pollution. Recently their use is therefore becoming limited.

With regard to studless snow and ice tyres, some improvements have been made in the low temperatures properties of tread rubber to try to provide grip properties such as the spiked tyres but even the latest studless tyres, however, are poor especially on frozen roads.

US-A-2274855 and 2582701 disclose a composition comprising a rubber and inorganic halides, such as sodium or potassium chloride, but the particles have a size of 0,84 to 2,0 mm. The rubber compositions are used for tyres showing good grip on ice and snow.

It is an object of the invention to provide a rubber composition which is useful for the treads of studless tyres which gives improved grip properties on frozen roads and maintain good performances after using for a long time.

Accordingly, the rubber composition of the present invention comprises a base rubber selected from the group consisting of natural rubber, synthetic polyisoprene, high-cis-1,4-polybutadiene and styrene-butadiene rubber and an inorganic halide which has a melting point of 180°C or more and a solubility of 5g or more in 100g or water at 0°C, said inorganic halide being present in an amount of 3 to 35 parts by weight based on 100 parts by weight of said base rubber, characterised in that the inorganic halide has an average particle size of 20 to 600 micrometer.

The inorganic halide is present in a crystalline state in the rubber composition and vulcanised as it is. The inorganic halide crystals are exposed on wearing the tread formed from the vulcanised rubber and scratch the ice surface so as to act as spikes in the similar way as for spiked tyres. The inorganic halide crystals thereafter drop off or dissolve in water on the roads and leavy many hollows in the tread surface which themselves enhance the frictional properties.

The inorganic halide employed in the present invention has a melting point of 180°C or more. If the melting point is less than 180°C, the inorganic halide fuses when the rubber composition is vulcanised and therefore does not function as mentioned above. It is also required that the inorganic halide also has solubility of 5g or more in 100g of water at 0°C. If the solubility is less than 5g, the inorganic halide does not dissolve in water and may cause dust pollution. The average particle size of the inorganic halide is also in the range of 20 to 600 micrometer, more preferably 100 to 300 micrometer. Average particle sizes of less than 20 micrometer do not give the spike effect and those of more than 600 micrometer deteriorate the tensile strength of the vulcanised rubber. Typical examples of suitable inorganic halides are sodium chloride, potassium chloride, sodium bromide, potassium bromide and the like.

The base rubber is selected from the group consisting of natural rubber, synthetic polyisoprene, high-cis-1,4-polybutadiene, styrene-butadiene rubber or a mixture thereof.

The inorganic halide is present in the rubber composition in an amount of 3 to 35 parts by weight max preferably 15 to 25 parts by weight, based on 100 parts by weight of the base rubber. Amounts of less than 3 parts by weight do not probide the spike effect and maounts more than 35 parts by weight deteriorate the other physical properties (e.g. tensile strength).

The rubber composition of the present invention may contain other ingredients which are formulated into the rubber composition, for example a vulcaniser (e.g. sulphur), a vulcanisation promoter (e.g. stearic acid and zinc oxide), an antioxidant (e.g. N-isopropyl-N-phenyl-p-phenylenediamine), an accelerator (e.g. N-cyclohexyl-2-benzothiazylsulphenamide), carbon black, a process oil (e.g. an aromatic oil) and the like.

The rubber composition of the present invention is generally prepared by sufficiently mixing the above mentioned ingredients. The rubber composition is very suitable for tyre treads. The rubber composition is generally vulcanised at 150 to 190°C for 3 to 480 minutes to form a tyre tread.

The inorganic halide crystals in the tyre treads are exposed by wearing and scratch the frozen road surface so as to act as the spikes of the spiked tyres, because the inorganic halide crystals are harder than the tread rubber. The inorganic halide crystals thereafter drop off or dissolve in water on the roads and leave many hollows and thus a rough surface on the tread which enhance the frictional properties and improves the slip properties on ice.

The hollows formed by the dislodgement or dissolved inorganic halide crystals have different shapes from those of ordinary foamed rubber, having rectangular, parallelepiped or other polygonal shapes. Since some of the inorganic halides, i.e. sodium chloride and potassium chloride, are also used as snow melting agents the dropped and dissolved inorganic halides often exhibit snow melting effects.

The present invention is particularly illustrated by the following examples which, however, are not to be construed as limiting the present invention to their details.

### Examples 1 to 6 Comparative Examples 1 and 2

A rubber composition was prepared by mixing the ingredients shown in Table 1 and vulcanised at 175 °C for 15 minutes to provide a tyre tread on a tyre having the size of 165SR13. The following tests were subjected to the tyre and the results are shown in Table 1.

### Friction index of vulcanised sample tip on ice

Test place; Frozen road test course in Hokkaido Ice surface temperature; 3 to 2°C Test process; Using a dynamic friction tester available from Sanko Co; Ltd, a friction coefficient was determined at breaking from 40 Km/h and expressed with an index of Comparative Example being 100.

### Ice surface test of tyres

Test place; Frozen road test course in Hokkaido
Ice surface temperatures; -3 to -2°C
Test car; FF 1,500 cc Japanese car
Rim; 5J x 13
Inflation pressure; 1.9 Kg/cm²
Test process; A friction coefficient was calculated from a locked breaking distance at a speed of 30 Km/h and expressed with a relative amount as Comparative Example 1 being 100.

### Tensile strength

The ingredients shown in Table 1 were mixed and rolled to form a rubber composition roll which was then vulcanised at 170°C for 15 minutes to form a rubber slab. A JIS dumbbell specimen was formed from the rubber slab and the tensile strength was determined using an intest universal material testing machine. In Table 1, it was expressed with the index for the Comparative Example 1 as 100.

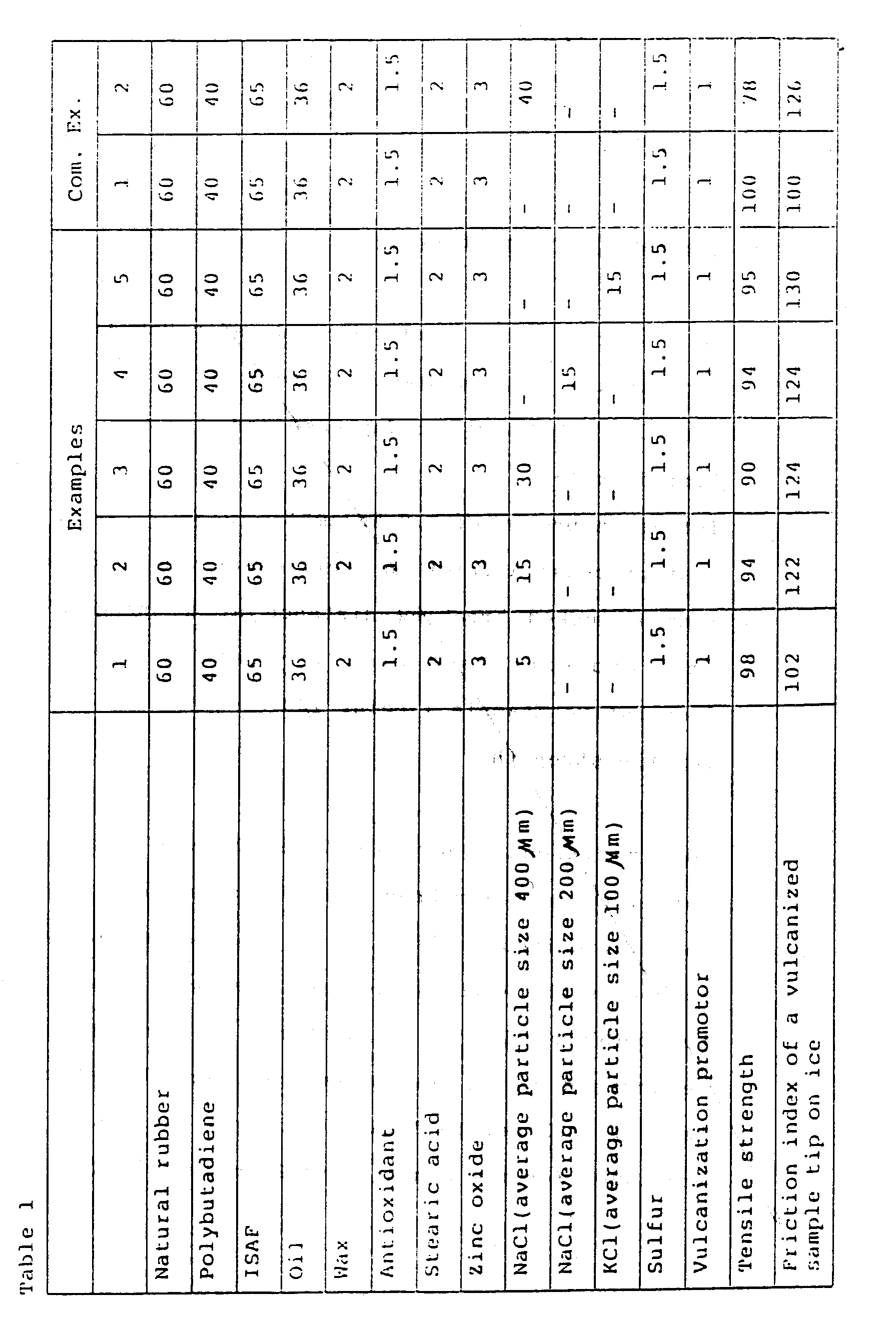

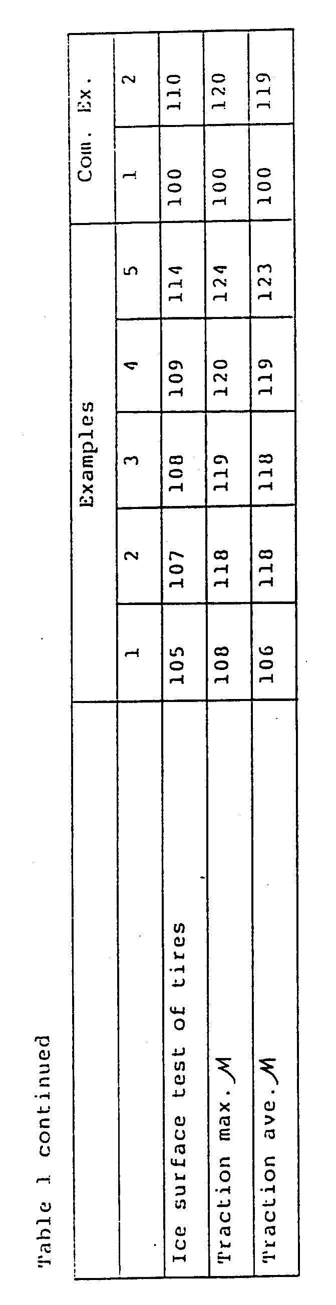

## Claims

1. A rubber composition comprising a base rubber selected from the group consisting of natural rubber, synthetic polyisoprene, high-cis-1,4-polybutadiene and styrene-butadiene rubber and an inorganic halide which has a melting point of 180°C or more and a solubility of 5g or more in 100g of water at 0°C, said inorganic halide being present in an amount of 3 to 35 parts by weight based on 100 parts by weight of said base rubber, characterised in that the inorganic halide has an average particle size of 20 to 600 micrometer.

2. A rubber composition according to claim 1, characterised in that said inorganic halide is solium chloride or potassium chloride.

3. A rubber composition according to claim 1 or 2, characterised in that said rubber composition also contains a vulcaniser, a vulcanisation promoter, an intioxidant, an accelerator carbon black and a process oil.

4. A tyre tread characterised by comprising vulcanised rubber composition according to claim 1.

## Patentansprüche

1. Kautschukmischung, umfassend einen Basiskautschuk, ausgewählt aus der aus Naturkautschuk, synthetischem Polyisopren hohem cis-1,4-Polybutadien und Styrol-Butadienkautschuk bestehenden Gruppe, und ein anorganisches Halogenid, das einen Schmelzpunkt von 180° C oder mehr und eine Löslichkeit von 5 g oder mehr in 100 g Wasser bei 0° C besitzt, wobei dieses anorganische Halogenid in einer Menge von 3 bis 35 Gew.-Teilen, bezogen auf 100 Gew.-Teile dieses Basiskautschuks vorhanden ist, dadurch gekennzeichnet, daß das anorganische Halogenid eine Durchschnittsteilchengröße 20 bis 600 »m hat.

2. Kautschukmischung nach Anspruch 1, dadurch gekennzeichnet, daß dieses anorganische Halogenid Natriumchlorid oder Kaliumchlorid ist.

3. Kautschukmischung nach Anspruch 1 oder 2, dadurch gekennzeichnert, daß diese Kautschukmischung ebenfalls ein Vulkanisationsmittel, einen Vulkanisationspromotor, ein Antioxidans, einen Beschleuniger, Ruß und ein Verarbeitungsöl enthält.

4. Luftreifenlauffläche, dadurch gekennzeichnet, daß sie vulkanisierte Kautschukmischung nach Anspruch 1 umfaßt.

## Revendications

1. Composition de caoutchouc comprenant un caoutchouc de base choisi dans le groupe constitué du caoutchouc naturel, du polyisoprène synthétique, du haut polymère cis-1,4-polybutadiène et du caoutchouc de styrène et de butadiène, ainsi qu'un halogénure inorganique qui possède un point de fusion supérieur ou égal à 180°C et une solubilité supérieure ou égale à 5 g dans 100 g d'eau à 0°C, ledit halogénure inorganique étant présent à raison de 3 à 35 parties en masse par rapport à 100 parties en masse dudit caoutchouc de base, caractérisée en ce que l'halogénure inorganique possède une dimension moyenne de particules comprise entre 20 et 600 »m.

2. Composition de caoutchouc selon la revendication 1, caractérisée en ce que ledit halogénure inorganique est le chlorure de sodium ou le chlorure de potassium

3. Composition de caoutchouc selon la revendication 1 ou 2, caractérisée en ce que ladite composition de caoutchouc contient également un vulcanisateur, un agent de favorisation de la vulcanisation, un antioxydant, un accélérateur, du noir de carbone et une huile plastifiante.

4. Bande de roulement de pneu caractérisée en ce qu'elle comprend une composition de caoutchouc vulcanisée selon la revendication 1.
